(19) **Europäisches Patentamt**
**European Patent Office**
**Office européen des brevets**

(11) **EP 3 299 180 B1**

(12) **EUROPEAN PATENT SPECIFICATION**

(45) Date of publication and mention
of the grant of the patent:
**12.06.2019 Bulletin 2019/24**

(51) Int Cl.:
*B60C 9/08* (2006.01)   *B60C 9/00* (2006.01)
*B60C 9/18* (2006.01)   *B60C 9/20* (2006.01)
*B60C 11/03* (2006.01)

(21) Application number: **16796229.9**

(22) Date of filing: **12.04.2016**

(86) International application number:
**PCT/JP2016/061840**

(87) International publication number:
**WO 2016/185835 (24.11.2016 Gazette 2016/47)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2015 JP 2015103482**

(43) Date of publication of application:
**28.03.2018 Bulletin 2018/13**

(73) Proprietor: **Bridgestone Corporation**
**Tokyo 104-8340 (JP)**

(72) Inventors:
• **TAKADA, Hiroshi**
**Tokyo 104-8340 (JP)**
• **YOKOKURA, Hiroyuki**
**Tokyo 104-8340 (JP)**
• **SAITO, Junko**
**Tokyo 104-8340 (JP)**
• **HOSHINO, Yuta**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
WO-A1-2005/087516   JP-A- H1 161 664
JP-A- 2000 229 504   JP-A- 2001 277 820
JP-A- 2002 192 910   JP-A- 2003 530 251
JP-A- 2012 153 214   JP-A- 2013 139 165

## Description

### Technical Field

An embodiment of the present invention relates to a pneumatic tire in which a reinforcing layer, in which reinforcing cords made of steel are embedded, is disposed between carcass plies.

### Background Art

The tire disclosed in Japanese Patent Application Laid-Open (JP-A) No. 2012-153214 for example is known as a conventional pneumatic tire.

This pneumatic tire has: a carcass layer that extends in a toroidal shape, and both end portions of the carcass layer in a transverse direction both end portions being folded-over onto a pair of bead cores, and the carcass layer being structured from two or more carcass plies in which are embedded plural carcass cords that are formed from organic fibers and are inclined with respect to the tire equator; a belt layer that is disposed at the radial direction outer side of the carcass layer; a tread that is disposed at the radial direction outer side of the belt layer; and a reinforcing layer that is disposed between adjacent carcass plies at a position overlapping the belt layer in the radial direction. The reinforcing layer is structured from reinforcing plies in which are embedded plural reinforcing cords that are made of steel and that are inclined with respect to the tire equator.

### SUMMARY OF INVENTION

### Technical Problem

Here, the present inventors discovered the problem that, in a case in which the inclination angle, with respect to the tire equator, of the reinforcing cords that are embedded within the aforementioned reinforcing plies is a large value that is greater than or equal to 40°, a large compressive force is repeatedly applied to the reinforcing cords at the time of traveling, and, as a result, when the pneumatic tire is run on over a long period of time, the reinforcing cords buckle and cord breakage arises. This is because, when the pneumatic tire contacts the road surface and deforms so as to become flat, due to the pantograph effect of the belt cords within the belt layer, the reinforcing plies undergo tensile deformation in the peripheral direction and elongate in the peripheral direction, and further, due to radial growth of the tread portion that is due to high-speed traveling, the belt layer and the reinforcing plies elongate in the peripheral direction, and, due to such elongation, the reinforcing plies start to deform such that the widths thereof become narrow. At this time, because the steel reinforcing cords, whose inclination angles are the above-described value, are embedded within the reinforcing plies, these reinforcing cords become supports, and narrowing of the widths of the reinforcing plies is suppressed to a certain extent, but, on the other hand, it is thought that this is because compressive force in the direction parallel to the reinforcing cords (the length direction) is repeatedly applied to the reinforcing cords. Note that the lateral force that is applied to the pneumatic tire at the time of traveling while turning, and the compressive force that is applied to the reinforcing cords due to input from projections being applied to the tread at the time of traveling, become even larger values.

An object of an embodiment of this invention is to provide a pneumatic tire that can effectively suppress buckling and cord breakage of reinforcing cords that are within a reinforcing layer.

### Solution to Problem

Such an object can be achieved by a pneumatic tire that is in accordance with claim 1. The pneumatic tire according to the present invention is structured from: a carcass layer that extends in a toroidal shape, both end portions of the carcass layer in a transverse direction being folded-over onto a pair of bead cores, and the carcass layer being structured from two or more carcass plies in which are embedded a plurality of carcass cords that are formed from organic fibers and are inclined with respect to a tire equator S; a belt layer that is disposed at a radial direction outer side of the carcass layer; a tread that is disposed at a radial direction outer side of the belt layer; and a reinforcing layer that is disposed between adjacent carcass plies at a position that overlaps the belt layer in a radial direction, the reinforcing layer being structured from at least one reinforcing ply in which are embedded a plurality of reinforcing cords that are formed from steel and that are inclined with respect to the tire equator S, wherein an inclination angle A of the reinforcing cords with respect to the tire equator S is within a range of 40 to 90°, a compressive rigidity F per 50 mm width of the reinforcing layer, in a direction parallel to the reinforcing cords, is within a range of 1000 to 2400 N, the number of reinforcing cords per 50 mm width of the reinforcing layer is 40 to 80, and a bending rigidity D of the reinforcing cords is within a range of 230 to 300 N$\bullet$m$^2$. Advantageous Effects of Invention

In an embodiment of this invention, the inclination angle A of the reinforcing cords with respect to the tire equator S is within the range of 40 to 90°, and the compressive rigidity F per 50 mm width of the reinforcing layer in the direction parallel to the reinforcing cords is greater than or equal to 1000 N. Therefore, even if compressive force is applied to the reinforcing cords such that the reinforcing layer (the reinforcing ply) start to become narrow in the transverse direction, these reinforcing cords can effectively withstand the compressive force, and a situation in which the reinforcing cords buckle and this develops into cord breakage can be suppressed effectively. Note that, if the compressive rigidity F exceeds 2400 N, the durability and ground contacting ability of the pneumatic tire deteriorate, and therefore, this cannot be used.

BRIEF DESCRIPTION OF DRAWINGS

Fig. 1 is a meridian cross-sectional view of a pneumatic tire showing Embodiment 1 of this invention.
Fig. 2 is a plan view in which a portion thereof is broken.

DESCRIPTION OF EMBODIMENTS

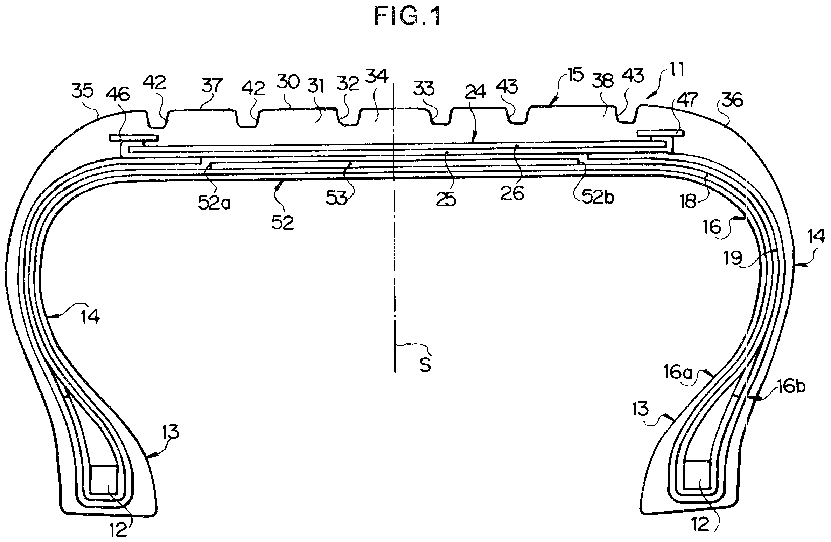

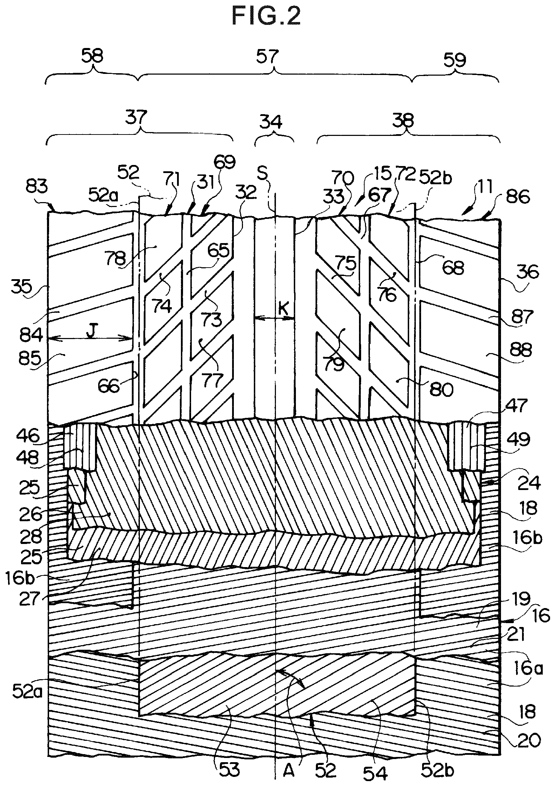

Embodiment 1 of this invention is described hereinafter on the basis of the drawings. In Figs. 1 and 2, 11 is a pneumatic tire for high-speed traveling that is mounted to an automobile. This pneumatic tire 11 has a pair of bead portions 13, and bead cores 12 that are formed in ring shapes are embedded in these bead portions 13 respectively. As a result, the pneumatic tire 11 has a pair of the bead cores 12. Further, the pneumatic tire 11 further has a pair of sidewall portions 14 that extend from the bead portions 13 toward the substantially radial direction outer side, and a tread portion 15 that is substantially cylindrical-tube-shaped and that connects the radial direction outer ends of the both sidewall portions 14. Further, the pneumatic tire has a carcass layer 16 that extends in a toroidal shape between the bead cores 12 and reinforces the sidewall portions 14 and the tread portion 15, and the tire transverse direction both end portions of this carcass layer 16 are folded-over around the pair of bead cores 12 from the inner side toward the outer side. As a result, the carcass layer 16 is sectioned into a main body portion 16a that is positioned between the bead cores 12, and a pair of folded-over portions 16b that are continuous with the both side ends of the main body portion 16a and are positioned further toward the outer sides than the bead cores 12.

The carcass layer 16 is structured from two or more, and, here, two, carcass plies 18, 19. These carcass plies 18, 19 are structured by plural carcass cords 20, 21, which are parallel to one another and are inclined at a cord angle of 70 to 90° (here, 80°) with respect to a tire equator S, being covered by a coating rubber. As a result, the plural carcass cords 20, 21 that are inclined with respect to the tire equator S are embedded within the carcass plies 18, 19. Here, the carcass cords 20, 21 are structured from organic fibers of nylon, polyester or the like (here, nylon). Further, in a case in which the cord angle is less than 90° as described above, these carcass cords 20, 21 are inclined, with respect to the tire equator S, in the opposite direction as at the carcass ply 18, 19 adjacent thereto. Further, hybrid cords, that are structured by twisting together two types of organic fibers, for example, nylon and aromatic polyamide filaments, may be used as the carcass cords 20, 21. By doing so, the rigidity of an aromatic polyamide is exhibited at times of high load and high temperature, and high rigidity can be ensured even in cases in which the cord angle with respect to the tire equator S is large at around 90°.

24 is a belt layer that is disposed so as to be superposed on the radial direction outer side of the carcass layer 16 at the tread portion 15. This belt layer 24 is structured by at least two (here, two) belt plies 25, 26 being layered in the radial direction. Each of the belt plies 25, 26 is structured by plural belt cords 27, 28, which are parallel to one another and are formed of, for example, steel or of organic fibers such as aromatic polyamide, nylon or the like (here, aromatic polyamide), being covered by a coating rubber. As a result, the plural belt cords 27, 28 are embedded within the belt plies 25, 26. Here, the belt cords 27, 28 are inclined at a cord angle of 10 to 40° (here, 25°) with respect to the tire equator S, and, at at least two of the belt plies (here, the two belt plies 25, 26), the directions of inclination with respect to the tire equator S are opposite directions and intersect one another. Further, the width of the belt ply 25 which is disposed at the radial direction inner side is formed to be slightly wider than the width of the belt ply 26 that is disposed at the radial direction outer side, and the transverse direction both end portions of the belt ply 25 are folded-over on the radial direction outer side of the belt ply 26. As a result, the transverse direction both end portions of the belt ply 26 are enveloped by the transverse direction both end portions of the belt ply 25, and strain at the transverse direction both ends of these belt plies 25, 26 is effectively suppressed.

Here, the both end portions of the carcass ply 18 extend greatly toward the radial direction outer side until interposed between the carcass ply 19 and the transverse direction both end portions of the belt layer 24 (the belt ply 25). Note that, in this embodiment, the both ends of the carcass ply 18 may extend to and end at vicinities of the position of the maximum width of the tire. Further, in this embodiment, the transverse direction both end portions of the belt ply 25 may extend substantially parallel to the belt ply 26, without being folded-over. 31 is a tread that is formed of rubber and is disposed at the radial direction outer side of the carcass layer 16 and the belt layer 24. A pair of main grooves 32, 33 that extend continuously in the tire peripheral direction are formed in a tread surface (outer periphery) 30 central portion of the tread 31, and these main grooves 32, 33 are formed at the both sides of the tire equator S so as to sandwich the tire equator S therebetween. As a result, a central land portion 34, which has a constant width and spans over the tire equator S and extends continuously in the tire peripheral direction, is defined between these main grooves 32, 33, and further, both side land portions 37, 38, which have wider widths than the central land portion 34 and extend continuously in the tire peripheral direction, are defined between the main groove 32 and a tread end 35 at one side and between the main groove 33 and a tread end 36 at another side, respectively. Note that, in the present embodiment, the main grooves may be bent in zigzag shapes while extending in the peripheral direction.

Here, two peripheral direction grooves 65, 66 and 67, 68, which extend continuously in the peripheral direction and whose groove widths are narrower than the main grooves 32, 33, are formed in the above-described both side land portions 37 and 38, respectively. A land portion 69 that extends continuously in the peripheral direction is formed between the peripheral direction groove 65 and the main groove 32, and a land portion 70 that extends continuously in the peripheral direction is formed between the peripheral direction groove 67 and the main groove 33. On the other hand, land portions 71, 72 that extend continuously in the peripheral direction are defined between the peripheral direction grooves 65, 66 and between the peripheral direction grooves 67, 68, respectively. These land portions 69, 71 and 70, 72 are sectioned into plural blocks 77, 78 and 79, 80 that are apart in the peripheral direction due to plural inclined grooves 73, 74 and 75, 76, which are apart in the peripheral direction and are inclined so as to head from the tire equator S toward the tire transverse direction outer sides while heading from the tire rotational direction front side toward the rotational direction rear side, being formed in these land portions 69, 71 and 70, 72, respectively.

Moreover, a land portion 83, which extends continuously in the peripheral direction and is defined between the peripheral direction groove 66 and the tread end 35 at the one side, is sectioned into plural blocks 85, which are apart in the peripheral direction, by plural inclined grooves 84 that are apart in the peripheral direction and that are inclined in the same direction as the inclined grooves 73, 74 and whose inclination angle with respect to the tire equator S is greater than those of the inclined grooves 73, 74. Further, a land portion 86, which extends continuously in the peripheral direction and is defined between the peripheral direction groove 68 and the tread end 36 at the another side, is sectioned into plural blocks 88, which are apart in the peripheral direction, by plural inclined grooves 87 that are apart in the peripheral direction and that are inclined in the same direction as the inclined grooves 75, 76 and whose inclination angle with respect to the tire equator S is greater than those of the inclined grooves 75, 76. 46, 47 are a pair of belt reinforcing layers that are provided at the transverse direction both end portions of the belt layer 24 at the radial direction outer side thereof, and these belt reinforcing layers 46, 47 are disposed so as to span over the transverse direction both ends of the belt layer 24. These belt reinforcing layers 46, 47 are structured by reinforcing cords 48, 49, which are formed from plural organic fibers that are nylon or polyester or the like (here, nylon) and extend in the peripheral direction and are parallel to one another, being covered by a coating rubber. As a result, the plural reinforcing cords 48, 49 that are parallel to the tire equator S are embedded within these belt reinforcing layers 46, 47.

52 is a reinforcing layer that is interposed between any carcass plies that are adjacent, and here, between the carcass ply 18 and the carcass ply 19, but, in a case in which there are three or more carcass plies, between any carcass plies that are adjacent. This reinforcing layer 52 overlaps the belt layer 24 in the radial direction, and, here, is disposed at the tread portion 15 at a position overlapping the radial direction inner side. The reinforcing layer 52 is structured from at least one (here, one) reinforcing ply 53, and the reinforcing ply 53 is structured by plural reinforcing cords 54, which are formed from steel and are parallel to one another, being covered with a coating rubber. Here, the reinforcing cords 54 are inclined at inclination angle A (here, 60°) that is within a range of 40 to 90° with respect to the tire equator S, and, as a result, the plural reinforcing cords 54, which are made of steel and are inclined with respect to the tire equator S, are embedded within the reinforcing layer 52. Note that, when the reinforcing layer 52 is structured from plural reinforcing plies 53, at the two reinforcing plies 53 that are adjacent, the reinforcing cords 54 are made to intersect one another with the directions of inclination thereof with respect to the tire equator S being opposite directions. Further, the reinforcing cord 54 is structured by plural filaments being twisted. Further, when the inclination angle A is greater than or equal to 40° in this way, compressive force is repeatedly applied to the reinforcing cords 54 as described above, and there are cases in which the reinforcing cords 54 buckle and cord breakage (breakage of the filaments) arises.

Therefore, in this embodiment, a layer, whose value of compressive rigidity per 50 mm width in the direction parallel to the reinforcing cords 54 (when strip-shaped bodies extending parallel to the reinforcing cords 54 are supposed and the width of the strip-shaped bodies is 50 mm, the length direction compressive rigidity of the strip-shaped body) F is within the range of 1000 N to 2400 N, is used as the reinforcing layer 52. Further, if, as described above, the inclination angle A of the reinforcing cords 54 with respect to the tire equator S is within a range of 40 to 90° and the compressive rigidity F per 50 mm width of the reinforcing layer 52 in the direction parallel to the reinforcing cords 54 is greater than or equal to 1000 N, due to the reinforcing ply 53 being affected by the deformation of the belt layer 24 and radial growth of the tread portion 15 as described above and the reinforcing ply 53 starting to become narrow in the transverse direction, even if compressive force is applied to the reinforcing cords 54, the reinforcing cords 54 can effectively withstand this compressive force, and a situation in which the reinforcing cords 54 buckle and this develops into cord breakage can be suppressed effectively as will be described later. Further, if cords whose bending rigidity D is within the range of 230 to 300 N●m² are used as the reinforcing cords 54, and further, the reinforcing cords 54 are included in an included number U of 40 to 80 per 50 mm width of the reinforcing layer 52 (the reinforcing ply 53), the value of the compressive rigidity F per 50 mm width of the reinforcing layer 52 can easily be kept within a range of 1000 N to 2400 N as will be described later. Further, when the inclination angle A with respect to the tire equator S is greater than or equal to 55°, cord breakage such as described above occurs frequently, and therefore, this is particularly effective at the reinforcing layer 52 at which the inclination angle A of the reinforcing cords 54 is greater than or equal to 55°.

Here, the value of the compressive rigidity F is determined as follows. Namely, a reinforcing-cord-containing sample, in which one reinforcing cord of a length of 25 mm is embedded in the central axis of a solid cylinder of rubber having a diameter of 25 mm and a height of 25 mm, and a rubber sample of only rubber in which the above-described reinforcing cord is not embedded, are respectively formed. Next, each sample is compressed 1 mm in the height direction at room temperature, and the compressive force needed at that time is measured. Further, a value, which is obtained by subtracting the compressive force at the rubber sample from the compressive force at the reinforcing-cord-containing sample, is used as the compressive rigidity of one reinforcing cord. Next, it is supposed that, among the 40 to 80 reinforcing cords, any number thereof are disposed in parallel in a space of a width of 50 mm, and the total compressive rigidity in this state is determined. Concretely, the above-described any number is multiplied by the above-described determined compressive rigidity of one reinforcing cord, and the result is used as the value of the compressive rigidity F per 50 mm width in the direction parallel to the reinforcing cords 54. However, if the bending rigidity D of the reinforcing cords 54 exceeds 300 N●m² or the included number of the reinforcing cords 54 per 50 mm width exceeds 80, there are cases in which the compressive rigidity F exceeds 2400 N. If the value of the compressive rigidity F exceeds 2400 N in this way, the coating rubber gauge between the adjacent reinforcing cords 54 is small, the coating rubber breaks, and the durability of the pneumatic tire 11 deteriorates, or, the bending rigidity of the reinforcing layer 52 is high, and there is little ground-contact deformation of the tread portion 15 at the time of traveling, and the handling stability of the pneumatic tire 11 deteriorates, and therefore, this cannot be used. Note that the above-described bending rigidity D (N●m²) of the cords can be determined from the simple model computational formula of cord breakage rigidity that is well known and is shown by following formula 1.

[Formula 1]

$$D = \frac{2N\cos\alpha}{\dfrac{1+\cos^2\alpha}{EI} + \dfrac{\sin^2\alpha}{GIp}} , \qquad G = \frac{E}{2(1+\mu f)}$$

In this formula, N is the number of filaments, $\alpha$ is the twisting angle of the filaments, E is the modulus of longitudinal elasticity of the filaments, G is the modulus of transverse elasticity of the filaments, I is the sectional secondary moment, Ip is the sectional secondary polar moment, d is the diameter of the filaments, and $\mu f$ is the Poisson's ratio of the filaments.

Here, in a case in which the reinforcing cords are structured by twisting plural filaments as described above, it is preferable that a twisting pitch Q of the filaments be within a range of 1.3 to 10.0 times (here, 3.0 times) as value V that is obtained by multiplying the number of filaments structuring the reinforcing cord 54 by the filament diameter. This is because, if the value of above-described Q/V is made to be within a range such as that mentioned above, the reinforcing cords 54 function as compressive springs, and therefore, even if large compressive force is repeatedly applied to the reinforcing cords 54, buckling and breakage of these reinforcing cords can be suppressed strongly. Further, in this embodiment, as described above, the tread surface 30 of the tread 31 is sectioned into plural land portions (the central land portion 34 and the blocks 77, 78, 79, 80, 85, 88) by the plural grooves (the main grooves 32, 33, the peripheral direction grooves 65, 66, 67, 68, the inclined grooves 73, 74, 75, 76, 84, 87). However, when these land portions are grouped into an inner side land portion 57, which is positioned at a position overlapping the reinforcing layer 52 in the radial direction (is positioned between a transverse direction one end 52a and a transverse direction another end 52b of the reinforcing layer 52), and a pair of outer side land portions 58, 59, which are positioned further toward the tire transverse direction both outer sides than the reinforcing layer 52 (are positioned between the transverse direction one end 52a and the transverse direction another end 52b of the reinforcing layer 52 and the tread ends 35, 36, respectively), a tire transverse direction length at any region of the inner side land portion 57 is smaller than the tire transverse direction maximum length at the outer side land portions 58, 59.

For example, in this embodiment, the land portions that form the outer side land portions 58, 59 are only the blocks 85, 88, and therefore, the transverse direction length of these blocks 85, 88 is tire transverse direction maximum length J of the land portions at the outer side land portions 58, 59. On the other hand, the central land portion 34 and the blocks 77, 78, 79, 80 are formed within the range of the inner side land portion 57, and tire transverse direction lengths K of these central land portion 34 and blocks 77, 78, 79, 80 are the same value, and, as a result, this tire transverse direction length K is the maximum value of the tire transverse direction lengths of the land portions at the inner side land portion 57. Further, in this embodiment, the tire transverse direction maximum length K is made to be smaller than the aforementioned tire transverse direction maximum length J. If the tire transverse direction length at any region of the inner side land portion 57 also is made to be smaller than the tire transverse direction maximum length J at the outer side land portions 58, 59 in this way, breakage of the inner side land portion 57 can be suppressed effectively while the drainage ability and grip force are ensured.

The reason for this is that, if the pneumatic tire 11 is structured as described above, at the inner side land portion 57, the number of grooves that extend in the peripheral direction is large and the drainage ability can easily be ensured, and, on the other hand, at the outer side land portions 58, 59, due to the tire transverse direction length of the land portions being long, the rigidity is high, and the grip force can easily be ensured. However, if the tire transverse direction length of the land portions at the inner side land portion 57 is short, the amount of deformation due to external force is large, and it is easy for breakage such as chipping or the like to arise at the land portions. However, because the reinforcing layer 52 is disposed so as to be overlap this inner side land portion 57, the foundation that supports the land portions is strong, and the aforementioned breakage of the land portions can be suppressed effectively.

[Example 1]

Experimental Example 1 is described next. In this experiment, there were prepared Comparative Tire 1 at which a reinforcing layer whose compressive rigidity F was 754 N was provided, Comparative Tire 2 at which a reinforcing layer whose compressive rigidity F was 803 N was provided, Comparative Tire 3 at which a reinforcing layer whose compressive rigidity F was 947 N was provided, Example Tire 1 at which a reinforcing layer whose compressive rigidity F was 993 N was provided, Example Tire 2 at which a reinforcing layer whose compressive rigidity F was 1224 N was provided, Example Tire 3 at which a reinforcing layer whose compressive rigidity F was 1811 N was provided, Example Tire 4 at which a reinforcing layer whose compressive rigidity F was 2407 N was provided, Comparative Tire 4 at which a reinforcing layer whose compressive rigidity F was 2451 N was provided, Comparative Tire 5 at which a reinforcing layer whose compressive rigidity F was 2510 N was provided, and Comparative Tire 6 at which a reinforcing layer whose compressive rigidity F was 2558 N was provided.

Here, the size of each of the above-described tires is 245/45R18, and the structures thereof are similar to that of the tire described in Embodiment 1. Then, each of the above-described tires was mounted to a 9J rim and was filled to an internal pressure of 210 kPa, and thereafter, was made to travel at a speed of 300 km/h on the outer periphery of a drum while bearing a load of 1 kN under the conditions of a camber angle of 0° and a slip angle of 1°, and, during this traveling, an impulse input of a load of 9 kN and a duration of 1 second was applied thereto in 10 cycles. Thereafter, each tire was dissected, and the number of places of cord breakage of the reinforcing cords was measured, and the results thereof (cord breakage) are shown in Table 1 with Example Tire 2 being an index of 100. Here, smaller numerical values indicate fewer places of cord breakage and are superior.

[Table 1]

|  | Comparative Tires | | | Example Tires | |
|---|---|---|---|---|---|
|  | 1 | 2 | 3 | 1 | 2 |
| compressive rigidity F | 754 | 803 | 947 | 993 | 1224 |
| bending rigidity D | 207 | 231 | 224 | 230 | 241 |
| included number U | 40 | 34 | 38 | 40 | 40 |
| cord breakage | 131 | 119 | 117 | 102 | 100 |
| handling stability | 8 | 8 | 8 | 8 | 8 |
| durability | 100 | 101 | 100 | 100 | 100 |

(continued)

| | Example Tires | | Comparative Tires | | |
|---|---|---|---|---|---|
| | 3 | 4 | 4 | 5 | 6 |
| compressive rigidity F | 1811 | 2407 | 2451 | 2510 | 2558 |
| bending rigidity D | 265 | 300 | 312 | 303 | 334 |
| included number U | 50 | 80 | 82 | 87 | 80 |
| cord breakage | 99 | 94 | 92 | 92 | 92 |
| handling stability | 8 | 8 | 6 | 8 | 5 |
| durability | 99 | 98 | 90 | 90 | 98 |

Next, after each of the above-described tires was filled to an internal pressure of 210kPa, the tires were mounted to a passenger car of a 2000 cc displacement, and were driven on a test course in a state in which one occupant was getting therein, and the handling stability was evaluated by the senses of a test driver. The results thereof are shown in Table 1, and, the greater the numerical value, the better the handling stability. Next, after each of the above-described tires was filled to an internal pressure of 210 kPa, the tires were made to travel on the outer periphery of a drum with the speed being increased from a speed of 250 km/h in increments of 10 km/h each 10 minutes while bearing a load of 8 kN under the conditions of a camber angle of 0° and a slip angle of 1°, and the speed at the time when a breakdown occurred at the reinforcing layer of the tire was determined. The results thereof (durability) are shown in Table 1 with Example Tire 2 being an index of 100. Here, the greater the numerical value, the better the durability.

Experimental Example 2 is described next, In this experiment, there were prepared Example Tire 5 that is similar to Example Tire 2 except that the value of Q/V obtained by dividing the twisting pitch Q by the value V is 1.1, Example Tire 6 that is similar to Example Tire 2 except that the value of Q/V is 1.2, Example Tire 7 that is similar to Example Tire 2 except that the value of Q/V is 1.3, Example Tire 2 (the value of Q/V is 3.0), Example Tire 8 that is similar to Example Tire 2 except that the value of Q/V is 10.0, Example Tire 9 that is similar to Example Tire 2 except that the value of Q/V is 10.3, and Example Tire 10 that is similar to Example Tire 2 except that the value of Q/V is 12.0. Next, a cord breakage test was carried out under conditions similar to those of the above-described cord breakage test. Thereafter, each tire was dissected, and the number of places of breakage of the reinforcing cords was measured, and the results thereof (cord breakage) are shown in Table 2 with Example Tire 2 being an index of 100, in the same way as in Table 1. Here, smaller numerical values indicate fewer places of cord breakage and are superior.

[Table 2]

| | Example Tires | | | | | | |
|---|---|---|---|---|---|---|---|
| | 5 | 6 | 7 | 2 | 8 | 9 | 10 |
| Q/V | 1.1 | 1.2 | 1.3 | 3.0 | 10.0 | 10.3 | 12.0 |
| cord breakage | 102 | 102 | 100 | 100 | 100 | 102 | 102 |

INDUSTRIAL APPLICABILITY

The embodiment of this invention can be applied to industrial fields in which a reinforcing layer, in which reinforcing cords made of steel are embedded, is disposed between carcass plies of a pneumatic tire.

**Claims**

1. A pneumatic tire (11) that is structured from:

    a carcass layer (16) that extends in a toroidal shape, both end portions of the carcass layer (16) in a transverse direction being folded-over onto a pair of bead cores (12), and the carcass layer (16) being structured from two or more carcass plies (18, 19) in which are embedded a plurality of carcass cords (20, 21) that are formed from organic fibers and are inclined with respect to a tire equator S;
    a belt layer (24) that is disposed at a radial direction outer side of the carcass layer (16);

a tread (31) that is disposed at a radial direction outer side of the belt layer (24); and

a reinforcing layer (52) that is disposed between adjacent carcass plies (18, 19) at a position that overlaps the belt layer (24) in a radial direction, the reinforcing layer (52) being structured from at least one reinforcing ply (53) in which are embedded a plurality of reinforcing cords (54) that are formed from steel and that are inclined with respect to the tire equator S,

**characterised in that** an inclination angle A of the reinforcing cords (54) with respect to the tire equator S is within a range of 40 to 90°,

wherein a compressive rigidity F per 50 mm width of the reinforcing layer (52), in a direction parallel to the reinforcing cords (54), is within a range of 1000 to 2400 N, the compressive rigidity F being the compressive rigidity of one reinforcing cord (54) multiplied by the number of reinforcing cords per 50 mm width of the reinforcing layer (52),

wherein the number of reinforcing cords per 50 mm width of the reinforcing layer (52) is 40 to 80,

wherein the reinforcing cords (54) are structured by twisting a plurality of filaments, and

wherein the reinforcing cords (54) have a bending rigidity D within a range of 230 to 300 N●m², D being represented by the formula:

$$D = \frac{2N\cos\alpha}{\dfrac{1 + \cos^2\alpha}{EI} + \dfrac{\sin^2\alpha}{GIp}}$$

and G being represented by the formula:

$$G = \frac{E}{2(1 + \mu f)}$$

with N being a number of filaments that structure the reinforcing cord (54), $\alpha$ being a twisting angle of the filaments, E being a modulus of longitudinal elasticity of the filaments, G being a modulus of transverse elasticity of the filaments, I being a sectional secondary moment, Ip being a sectional secondary polar moment, d being a diameter of the filaments, and $\mu$f being a Poisson's ratio of the filaments.

2. The pneumatic tire of Claim 1, wherein a tread surface (30) of the tread (31) is sectioned into a plurality of land portions (34, 77, 78, 79, 80, 85, 88) by grooves (32, 33, 65, 66, 67, 68, 73, 74, 75, 76, 84, 87), and a tire transverse direction length of an inner side land portion (57), which is positioned at a position overlapping the reinforcing layer (52) in the radial direction, is smaller than a tire transverse direction maximum length of outer side land portions (58, 59), which are positioned further toward tire transverse direction both outer sides than the reinforcing layer (52).

3. The pneumatic tire of Claim 1 or 2, wherein a twisting pitch Q of the filaments is within a range of 1.3 to 10.0 times a value V that is obtained by multiplying the number of filaments that structure the reinforcing cord (54) by the filament diameter.

4. The pneumatic tire of any one of Claims 1 through 3, wherein the inclination angle A of the reinforcing cords (54) with respect to the tire equator S is greater than or equal to 55°.

**Patentansprüche**

1. Luftreifen (11), der strukturiert ist aus:

einer Karkassenschicht (16), die sich toroidförmig erstreckt, wobei beide Endabschnitte der Karkassenschicht (16) in einer Querrichtung auf ein Paar Wulstkerne (12) umgebogen sind und die Karkassenschicht (16) strukturiert ist aus zwei oder mehr Karkassenlagen (18, 19), in die eine Vielzahl von Karkassenkorden (20, 21) eingebettet ist, die aus organischen Fasern gebildet sind und in Bezug auf einen Reifenäquator S geneigt sind;

einer Gürtelschicht (24), die an einer Radialrichtungsaußenseite der Karkassenschicht (16) angeordnet ist;

einer Lauffläche (31), die an einer Radialrichtungsaußenseite der Gürtelschicht (24) angeordnet ist; und

einer Verstärkungsschicht (52), die zwischen benachbarten Karkassenlagen (18, 19) an einer Position angeordnet ist, die die Gürtelschicht (24) in radialer Richtung überlappt, wobei die Verstärkungsschicht (52) aus mindestens einer Verstärkungslage (53) strukturiert ist, in die eine Vielzahl von Verstärkungskorden (54) eingebettet ist, die aus Stahl gebildet sind und in Bezug auf den Reifenäquator S geneigt sind,

**dadurch gekennzeichnet, dass** ein Neigungswinkel A der Verstärkungskorde (54) in Bezug auf den Reifenäquator S in einem Bereich von 40 bis 90° liegt.

wobei eine Drucksteifigkeit F pro 50 mm Breite der Verstärkungsschicht (52) in einer Richtung parallel zu den Verstärkungskorden (54) in einem Bereich von 1000 bis 2400 N liegt, wobei die Drucksteifigkeit F die Drucksteifigkeit eines einzelnen Verstärkungskords (54) ist, multipliziert mit der Anzahl der Verstärkungskorde pro 50 mm Breite der Verstärkungsschicht (52),

wobei die Anzahl der Verstärkungskorde pro 50 mm Breite der Verstärkungsschicht (52) 40 bis 80 beträgt.

wobei die Verstärkungskorde (54) durch Verdrehen einer Vielzahl von Filamenten strukturiert sind und

wobei die Verstärkungskorde (54) eine Biegesteifigkeit D innerhalb eines Bereichs von 230 bis 300 N·m² haben, wobei D durch die folgende Formel dargestellt wird:

$$D = \frac{2N\cos\alpha}{\frac{1 + \cos^2\alpha}{EI} + \frac{\sin^2\alpha}{GIp}}$$

und G durch die folgende Formel dargestellt wird:

$$G = \frac{E}{2(1 + \mu f)}$$

wobei N eine Anzahl von Filamenten ist, die den Verstärkungskord (54) strukturieren, wobei α ein Verdrehungswinkel der Filamente ist, E ein Modul der longitudinalen Elastizität der Filamente ist, G ein Modul der Querelastizität der Filamente ist, I ein sektionales sekundäres Moment ist, wobei Ip ein sektionales sekundäres polares Moment ist, d ein Durchmesser der Filamente ist und μf ein Poisson-Verhältnis der Filamente ist.

2. Luftreifen nach Anspruch 1, wobei eine Laufflächenoberfläche (30) der Lauffläche (31) durch Rillen (32, 33, 65, 66, 67, 68, 73, 74, 75, 76, 84, 87) in mehrere Stegabschnitte (34, 77, 78, 79, 80, 85, 88) unterteilt ist und eine Länge in Reifenquerrichtung eines Innenseitenstegabschnitts (57), der an einer Position positioniert ist, die die Verstärkungsschicht (52) überlappt, in Radialrichtung kleiner ist als eine maximale Länge in Reifenquerrichtung von Außenseitenstegabschnitten (58, 59), die weiter in Richtung beider Außenseiten in Reifenquerrichtung angeordnet sind als die Verstärkungsschicht (52).

3. Luftreifen nach Anspruch 1 oder 2, wobei eine Verdrehsteigung Q der Filamente im Bereich des 1,3 bis 10,0-fachen eines Wertes V liegt, der durch Multiplizieren der Anzahl der Filamente, die den Verstärkungskord (54) strukturieren, mit dem Filamentdurchmesser erhalten wird.

4. Luftreifen nach einem der Ansprüche 1 bis 3, wobei der Neigungswinkel A der Verstärkungskorde (54) in Bezug auf den Reifenäquator S größer als oder gleich 55° ist.

**Revendications**

1. Pneumatique (11) structuré de la manière suivante:

une couche de carcasse (16) qui s'étend sous une forme toroïdale, les deux parties d'extrémité de la couche de carcasse (16) dans une direction transversale étant repliées sur une paire de noyaux de tringle (12), et la couche de carcasse (16) étant structurée à partir de deux couches de carcasse (18, 19) ou plus, dans lesquelles sont noyées une pluralité de cordes de carcasse (20, 21) formées de fibres organiques et inclinées par rapport à un équateur de pneumatique S;

une couche de ceinture (24) qui est disposée sur un côté extérieur de direction radiale de la couche de carcasse (16);

une bande de roulement (31) qui est disposée sur un côté extérieur de direction radiale de la couche de ceinture (24); et

une couche de renforcement (52) qui est disposée entre des couches de carcasse adjacentes (18, 19) en une position qui chevauche la couche de ceinture (24) dans une direction radiale, la couche de renforcement (52) étant structurée à partir d'au moins une couche de renforcement (53) dans laquelle sont noyés une pluralité de câbles de renforcement (54) formés d'acier et inclinés par rapport à l'équateur de pneu S, **caractérisé en ce que** l'angle d'inclinaison A des câbles de renforcement (54) par rapport à l'équateur de pneu S se situe dans une plage allant de 40 à 90 °,

dans laquelle la rigidité en compression F par 50 mm de largeur de la couche de renforcement (52), dans une direction parallèle aux câbles de renforcement (54), est comprise dans l'intervalle allant de 1000 à 2400 N, la rigidité en compression F étant la rigidité en compression d'un câble de renforcement (54) multipliée par le nombre de câbles de renforcement par 50 mm de largeur de la couche de renforcement (52),

dans lequel le nombre de câbles de renforcement par 50 mm de largeur de la couche de renforcement (52) est compris entre 40 et 80,

dans lequel les câbles de renforcement (54) sont structurés en torsadant une pluralité de filaments, et

dans lequel les câbles de renforcement (54) ont une rigidité à la flexion D comprise dans une plage allant de 230 à 300 N$\bullet$m$^2$, D étant représenté par la formule:

$$D = \frac{2N\cos\alpha}{\dfrac{1 + \cos^2\alpha}{EI} + \dfrac{\sin^2\alpha}{GIp}}$$

et G étant représenté par la formule :

$$G = \frac{E}{2(1 + \mu f)}$$

avec N étant un nombre de filaments qui structurent le câble de renforcement (54), $\alpha$ étant un angle de torsion des filaments, E étant un module d'élasticité longitudinale des filaments, G étant un module d'élasticité transversale des filaments, I étant un moment secondaire sectionnel, Ip étant un moment polaire secondaire sectionnel, d étant le diamètre des filaments et $\mu$f le coefficient de Poisson des filaments.

2. Pneumatique selon la revendication 1, dans lequel une surface de bande de roulement (30) de la bande de roulement (31) est divisée en plusieurs parties de méplat (34, 77, 78, 79, 80, 85, 88) par des rainures (32, 33, 65, 66, 67, 67, 68, 73, 74, 75, 76, 84, 87), et une longueur de direction transversale du pneu d'une partie de méplat de côté intérieur (57), qui est positionnée à une position chevauchant la couche de renforcement (52) dans la direction radiale, est plus petite que la longueur maximale dans la direction transversale du pneu des parties de méplat latérales extérieures (58, 59), qui sont positionnées plus loin vers les deux côtés extérieurs dans la direction transversale du pneu que la couche de renforcement (52).

3. Pneumatique selon les revendications 1 ou 2, dans lequel le pas de torsion Q des filaments est compris dans l'intervalle de 1,3 à 10,0 fois une valeur V obtenue en multipliant le nombre de filaments qui structurent le câble de renforcement (54) par le diamètre du filament.

4. Pneumatique selon l'une quelconque des revendications 1 à 3, dans lequel l'angle d'inclinaison A des câbles de renforcement (54) par rapport à l'équateur de pneumatique S est supérieur ou égal à 55°.

FIG.1

EP 3 299 180 B1

# FIG.2

**EP 3 299 180 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012153214 A